# EUROPÄISCHE PATENTANMELDUNG

(11) **EP 1 091 132 A2**
(43) Veröffentlichungstag der Anmeldung: **11.04.2001**
(21) Anmeldenummer: 00119485.1
(22) Anmeldetag: 18.09.2000
(51) Int. Cl.: F16B 5/06

(54) **Anordnung zur lösbaren Befestigung eines Bauteils an einer Wand**

(30) Priorität: 07.10.1999 DE 19948165
(71) Anmelder: Volkswagen Aktiengesellschaft, 38436 Wolfsburg (DE)
(72) Erfinder: Bergs, Andreas, 38518 Gifhorn (DE); Schliephake, Christian, 38112 Braunschweig (DE)

(57) **Zusammenfassung**

Zur lösbaren Befestigung einer Säulenverkleidung (2) an einer Säulenwand (1) eines Kraftfahrzeugs dient eine Anordnung mit einem eine Wandöffnung (4) durchsetzenden, die Wand (1) zwischen Anschlägen (10, 11) einspannenden Spreizclip (5), der eine Aufnahme (6) zum Einschieben eines zur Wand (1) parallelen Schenkels (7) eines Fortsatzes (8) der Verkleidung (2) trägt. Mittels einer Rastnase (12) an der Aufnahme (2) ist der Schenkel (7) formschlüssig am Herausrutschen gehindert, solange er durch einen Federschenkel (13) in der Wirkungsebene der Rastnase (12) gesichert ist. Durch Aufbringen einer die Kraft des Federschenkels (13) übersteigenden Kraft auf die Verkleidung (2) senkrecht zur Wand (1) kann der Schenkel (7) aus der Wirkungsebene der Rastnase (12) und dann durch Aufbringen einer Kraft etwa parallel zur Wand (1) aus der Aufnahme (6) bewegt werden.

## Beschreibung

Die Erfindung betrifft eine Anordnung gemäß dem Oberbegriff des Patentanspruchs 1.

Betrachtet man den bevorzugten Einsatzfall der Erfindung, nämlich die lösbare Befestigung einer Säulenverkleidung in einem Kraftfahrzeug an einer Säulenwand, beispielsweise der Wand einer A- oder B-Säule, so sind derartige Verkleidungen bei modernen Fahrzeugen so ausgebildet, daß sie in Expansionsrichtung vor einem Airbag liegende geschwächte Partien aufweisen, die im Falle eines Crashs des Fahrzeugs durch den expandierenden Airbag zur Schaffung eines Durchtritts für diesen zerstört werden. Demgemäß kann es erforderlich sein, nach einem Crash mit Ansprechen von Airbags derartige Bereiche von Säulenverkleidungen zu ersetzen. Die Erfindung ist jedoch auch in anderen Fällen mit Vorteil einsetzbar, wenn einerseits eine sichere Festlegung eines Bauteils an einer Wand erforderlich ist, andererseits die Befestigungsanordnung aber so ausgebildet sein soll, daß die Befestigung beispielsweise zum Austausch von Teilen zerstörungsfrei aufhebbar ist.

Befestigungsanordnungen zum lösbaren Befestigen von Bauteilen, die auch die Möglichkeit des Lösens des Bauteils ohne Zerstörung von Teilen bieten, sind Stand der Technik, In diesem Zusammenhang sei nur die DE 43 33 494 A1 genannt, die die Befestigung eines Aufnahmelagers für eine Sonnenblende zum Gegenstand hat. Dieser gattungsbildende Gegenstand der Technik beschreibt im einzelnen eine Befestigungsanordnung mit einem in eine Öffnung einer Fahrzeugwand eindrückbaren, diese zwischen federnden Anschlägen erfassenden Spreizclip, der auf einer Seite der Wand eine federnde Aufnahme für eine Sonnenblendenachse trägt. Diese Sonnenblendenachse ist dort lediglich unter der Wirkung von Federkräften gelagert, so daß sie durch Aufbringen einer im wesentlichen parallel zur Wand verlaufenden Kraft auch unbeabsichtigt aus der Aufnahme herausbewegt werden kann.

Der Erfindung liegt die Aufgabe zugrunde, eine gattungsgemäße Anordnung so auszubilden, daß sie trotz Vorhandenseins relativ hoher Haltekräfte für das Bauteil eine Aufhebung der Befestigung mit verhältnismäßig geringen Kräften zuläßt.

Die erfindungsgemäße Lösung dieser Aufgabe besteht in den kennzeichnenden Merkmalen des Hauptanspruchs, eine vorteilhafte Ausgestaltung der Erfindung beschreibt der Unteranspruch.

Ein wesentlicher Unterschied der Erfindung gegenüber dem diskutierten Stand der Technik ist darin zu sehen, daß durch die Rastnase eine formschlüssige Arretierung des zweiten Schenkels des Fortsatzes des Bauteils gebildet wird, da dieser Schenkel durch den Federschenkel in der Wirkungsebene der Rastnase, also in seiner Lage hinter dieser, gehalten wird; dagegen wird bei der Erfindung eine Aufhebung der Befestigung des Bauteils mit geringen Betätigungskräften dadurch ermöglicht, daß der definierte zweite Schenkel entgegen den gleichsam als Niederhaltekräfte zu bezeichnenden elastischen Kräften des Federschenkels aus dem Wirkungsbereich der Rastnase herausgehoben oder herausgezogen werden kann. Ein wesentliches Merkmal der Erfindung ist demnach ein hohe Befestigungskräfte bei niedrigen Kräften zur Aufhebung der Verbindung sicherstellender aufhebbarer Formschluß.

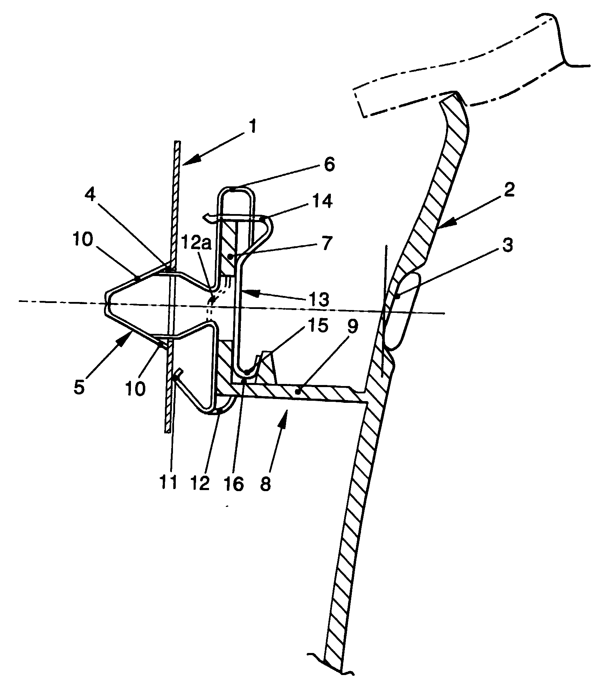

Ein Ausführungsbeispiel der Erfindung für den bevorzugten Einsatzfall derselben wird im folgenden anhand der Zeichnung erläutert, die einen senkrechten Schnitt darstellt.

Bei 1 ist die Innenwand einer Fahrzeugsäule angedeutet, an der die Wandverkleidung 2 befestigt werden soll. Diese ist bei 3 mit einer geschwächten Zone zur Ermöglichung der Expansion eines nicht dargestellten Airbags versehen.

Zur aufhebbaren Befestigung der Verkleidung 2 an der Wand 1 ist diese mit der Durchtrittsöffnung 4 versehen und im übrigen eine Anordnung vorgesehen, die einen Spreizclip 5 und eine Aufnahme 6 an diesem für den zweiten, parallel zur Wand 1 verlaufenden Schenkel 7 des Fortsatzes 8 an der Wandverkleidung 2 enthält. Der Fortsatz 8 weist ferner den in Richtung auf die Wand 1 verlaufenden ersten Schenkel 9 auf.

Betrachtet man zunächst den Spreizclip 5, so besitzt dieser in an sich bekannter Weise federnde Anschläge 10 und 11, mit denen er den Rand der Öffnung 4 der Wand 1 gleichsam einspannt. Auf der in der Figur rechten Seite der Wand 1 geht der Spreizclip 5 über in die Aufnahme 6, die in der Darstellung der Figur in Richtung nach unten mit einem Ein- und Austritt für den zweiten Schenkel 7 des Fortsatzes 8 versehen ist. Damit dieser zweite Schenkel 7 sich nicht in unerwünschter Weise aus der Aufnahme 6 herausbewegt, ist diese mit der Rastnase 12 versehen, die die besagte Bewegung des zweiten Schenkels 7 verhindert, solange sich dieser in der Wirkungsebene der Rastnase 12, also in Richtung dieser Bewegung hinter dieser, befindet. Diese Lage des zweiten Schenkels 7 wird durch den mit der Aufnahme 6 einteiligen Federschenkel 13 sichergestellt, der mit seinem einen Anschlag bildenden oberen Endbereich 14 an der Aufnahme 6 ist, während sein abgerundeter freier Endbereich 15 in die rinnenförmige Lagerung 16 an dem Fortsatz 8 eingreift. In dem dargestellten montierten Zustand der Gesamtanordnung wird also durch den Federschenkel 13 der zweite Schenkel 7 des Fortsatzes 8 in der beschriebenen Wirkungsebene der Rastnase 12 gesichert, so daß hier eine formschlüssige Halterung vorliegt. Sobald aber auf die Verkleidung 2 und damit auf den Fortsatz 8 in der Darstellung der Zeichnung nach rechts wirkende Kräfte ausgeübt werden, die die elastischen Niederhaltekräfte des Federschenkels 13 übersteigen, wird der zweite Schenkel 7 nach rechts aus der Wirkungsebene der Rastnase 12 herausgehoben und kann durch Aufbringen einer in der Figur nach unten gerichteten Kraft auf die Verkleidung 2 aus der Aufnahme 6 herausbewegt werden. Das bedeutet, daß mit verhältnismäßig geringen Kräften die beschriebene Befestigung aufgehoben und die Verkleidung 2 von der Wand 1 entfernt werden kann.

Bei 12 a ist eine andere Möglichkeit der Positionierung der Rastnase angegeben.

Da im Prinzip alle Bestandteile der Befestigungsanordnung beim Lösen der Befestigung unbeschädigt bleiben, können sie für die erneute Befestigung der Verkleidung oder einer neuen Verkleidung benutzt werden.

Mit der Erfindung ist demgemäß mit geringem Aufwand eine ― übrigens verdeckte - gattungsgemäße Anordnung geschaffen, die hohe Befestigungskräfte sicherstellt und nur geringe Kräfte zum Lösen der Verbindung erfordert.

## Patentansprüche

1. Anordnung zur lösbaren Befestigung eines Bauteils an einer Wand, insbesondere einer Säulenverkleidung in einem Kraftfahrzeug an einer Säulenwand, mit einem in eine Öffnung in die Wand eindrückbaren, diese zwischen federnden Anschlägen erfassenden Spreizclip, der zur lösbaren Arretierung des Bauteils eine federnde Aufnahme trägt, dadurch gekennzeichnet, daß das Bauteil (2) einen winkelförmigen Befestigungsfortsatz (8) mit einem vom Bauteil (2) in Richtung auf die Wand (1) abgehenden ersten Schenkel (9) und einem daran anschließenden zweiten Schenkel (7) trägt, der im wesentlichen parallel zu der Wand (1) verlaufend in der Aufnahme (6) durch eine Rastnase (12) formschlüssig am Herausbewegen gehindert und durch einen Federschenkel (13) an der Aufnahme (6) in der Wirkungsebene der Rastnase (12) gehalten ist.

2. Anordnung nach Anspruch 1, dadurch gekennzeichnet, daß der Federschenkel (13) aufnahmeseitig einen der Rastnase (12) gegenüberliegenden Anschlag (14) für den zweiten Schenkel (7) des Befestigungsfortsatzes (8) bildet und mit einem gegenüberliegenden Ende (15) in eine Aufnahmerinne (16) am ersten Schenkel (9) des Befestigungsfortsatzes (8) hinreinragt.
